# FASCICULE DE BREVET EUROPEEN

(11) **EP 1 799 006 B1**
(45) Date de publication et mention de la délivrance du brevet: **24.04.2013**
(21) Numéro de dépôt: 06026043.7
(22) Date de dépôt: 15.12.2006
(51) Int. Cl.: H04W 64/00

(54) **Procédé, equipement et système de détermination de la localisation d'un terminal mobile en état de veille**
Verfahren, Gerät und System zur Bestimmung der Lokalisierung eines mobilen Endgeräts im Standby-Modus
Method, apparatus and system of determining the location of a mobile terminal in search condition

(30) Priorité: 15.12.2005 FR 0512763
(43) Date de publication de la demande: 20.06.2007
(73) Titulaire: SAGEMCOM ENERGY & TELECOM SAS, 92500 Rueil-Malmaison (FR)
(72) Inventeur: Dorion-Cousinat, Marc, 69009 Lyon (FR)
(74) Mandataire: Maillet, Alain

(56) Documents cités:
- EP-A- 1 526 749
- WO-A-97/09837
- US-A1- 2005 119 007
- US-B1- 6 363 255

## Description

La présente invention concerne un procédé de détermination de localisation d'un terminal mobile en état de veille dans un système de télécommunication cellulaire. Elle concerne également un système de communication cellulaire et un équipement associé audit terminal mobile mettant en oeuvre les étapes dudit procédé.

Il existe de nombreux systèmes de communication pour terminaux mobiles et on peut citer, en particulier, celui qui fait l'objet de recommandations auprès de l'ETSI (European Telecommunications Standards Institute) et qui est connu sous le nom de GSM (Global System for Mobile Communications). Bien que la présente description soit faite en relation avec ce système de télécommunication par mobile, l'invention s'applique à tout système équivalent tel que le système UMTS (Universal Mobile Telecommunication System).

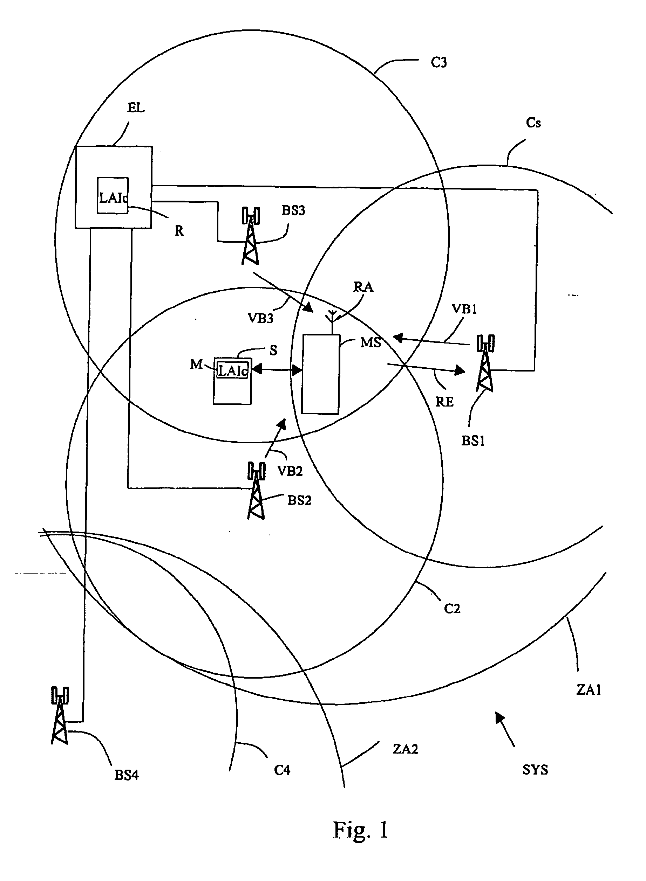

Un exemple de système de communication pour terminaux mobiles SYS, représenté schématiquement à la Fig. l, est formé d'un réseau de communication cellulaire constitué de quatre stations de base BS₁, BS₂, BS₃ et BS₄ respectivement reliées à un équipement de détermination de localisation EL lui-même relié aux autres équipements contrôlant le fonctionnement du système de communications cellulaire (équipements non représentés sur la Fig. 1). Chaque station de base BSᵢ (i=1,...,4) couvre respectivement une zone géographique appelée cellule Cᵢ (i=1,...,4). On peut remarquer que la cellule C₁ est ici appelée Cₛ pour des raisons qui seront explicitées ultérieurement. L'équipement de détermination de localisation EL peut regrouper un certain nombre d'équipement tels que, par exemple en ce qui concerne un réseau de type GSM, des contrôleurs de station de base généralement nommés BSC, des commutateurs pour mobiles généralement nommés MSC, des registres de localisation HLR et VLR, etc. Seul l'un de ces registres, appelé registre de localisation R par la suite, est représenté sur la Fig. 1. On a également représenté sur la Fig. 1 un terminal mobile MS, par exemple un téléphone mobile, qui se trouve à la fois sous la couverture de la station de base BS₁, de la station de base BS₂ et de la station de base BS₃. Le terminal mobile MS est associé à un support mémoire S comportant une mémoire M. Le support mémoire S est par exemple une carte SIM (Subscriber Identity Module).

Le rôle principal d'un procédé de détermination de localisation d'un terminal mobile MS dans un réseau de communication cellulaire est de permettre à l'équipement de détermination de localisation EL de connaître à tout instant la position géographique du terminal mobile MS, que le terminal mobile soit en état de veille ou en cours de communication, et ce afin que l'équipement de détermination de localisation EL puisse respectivement établir une communication avec le terminal mobile MS ou assurer la continuité d'une communication en cours.

Pour cela, dans le cas où le système de communication SYS dessert des populations importantes d'usagers, la couverture du réseau de communication cellulaire est définie par regroupements de cellules appelées zones de localisation ZAᵢ. Chacune de ces zones de localisation est identifiée par un identifiant unique LAlᵢ (Local Area Identity). Selon la Fig. 1, les cellules C₁, C₂ et C₃ ont été regroupées pour former une zone de localisation ZA₁ et la cellule C₄ forme une autre zone de localisation ZA₂. De plus, l'identifiant LAI_{c} de la zone de localisation courante, c'est-à-dire l'identifiant de la zone de localisation sous laquelle se trouve le terminal mobile MS (en l'occurrence l'identifiant de la zone de localisation ZA₁), est mémorisé, d'une part, avec les données concernant l'usager, par exemple dans le registre de localisation R, et d'autre part, dans la mémoire M.

L'identité de la zone de localisation courante est mise à jour périodiquement à la fois dans la mémoire M et dans le registre de localisation R. Pour cela, le terminal mobile MS communique périodiquement l'identifiant de la zone de localisation mémorisé dans la mémoire M à l'équipement de détermination de localisation EL. De plus, certains systèmes de communication cellulaire, tels que le système GSM par exemple, utilise une méthode de mise à jour sur changement de zones de localisation.

Au cours d'une telle méthode, il est déterminé une cellule de service Cₛ pour le terminal mobile MS, c'est-à-dire une cellule dont la station de base permet au terminal mobile MS de pouvoir communiquer de manière acceptable avec le système de communication cellulaire et plus particulièrement avec l'équipement de détermination de localisation EL. Dans le cas où le terminal mobile MS se trouve sous la couverture de plusieurs stations de base, en l'occurrence sous la couverture des stations de base BS₁, BS₂ et BS₃ selon l'exemple de la Fig.l, le choix de l'une de ces stations de base se fait en fonction de critères radio, pour assurer à l'usager que le terminal mobile MS est capable de communiquer avec une qualité de service acceptable.

Chaque station de base BSᵢ (i=1,...,4) d'un système de communication cellulaire diffuse périodiquement sur une voie balise VBᵢ (le canal BCCH dans le cas du GSM) l'identifiant de la zone de localisation à laquelle elle appartient. Ainsi, en écoutant les messages diffusés par la voie balise de la station de base correspondante à la cellule de service Cₛ, en l'occurrence la voie balise VB₁ de la station de base BS₁, le terminal mobile MS reçoit périodiquement l'identifiant LAI_{c} de la zone de localisation courante. Si le terminal mobile MS constate que l'identifiant LAI_{c} ainsi reçu est différent de l'identifiant qu'il a mémorisé préalablement dans la mémoire M, il mémorise alors l'identifiant de la nouvelle zone de localisation dans la mémoire M en remplacement de l'identifiant précédemment mémorisé et signale, par l'intermédiaire d'un canal dédié montant RE, ce changement de zone de localisation à l'équipement de détermination de localisation EL qui met alors à jour l'identifiant de la zone de localisation préalablement mémorisé dans le registre de localisation R.

Lorsque l'équipement de détermination de localisation EL doit établir une communication avec le terminal mobile MS, il détermine la zone de localisation courante à partir de l'identifiant mémorisé dans le registre de localisation R et recherche le terminal mobile MS dans cette zone de localisation courante, en l'occurrence dans la zone de localisation ZA₁, en émettant des avis de recherche (appelés messages de paging dans le cas d'un réseau de type GSM) vers les stations.de base de la zone de localisation courante, en l'occurrence vers les stations de base BS₁, BS₂ et BS₃. Chacun de ces avis de recherche est alors diffusé vers le terminal mobile MS via la voie balise VBᵢ de chacune de ces stations de base. Le terminal mobile MS détermine la cellule de service Cs parmi les cellules C1, C2 et C3 de la zone de localisation courante et envoie alors un message de réponse via le canal dédié RE vers la station de base correspondante à la cellule de service, en l'occurrence la station de base BS1. Ce message de réponse indique à l'équipement de détermination de localisation EL que la cellule de service du terminal mobile MS est la cellule Cs selon l'exemple de la Fig. 1. Ainsi, une fois que le terminal mobile MS est en cours de communication, l'équipement de détermination de localisation connaît la cellule dans laquelle se trouve le terminal mobile MS et donc la position géographique du terminal mobile MS à la cellule près.

Par contre, dans le cas où le terminal mobile MS est en état de veille, l'équipement de détermination de localisation EL ne connaît la position géographique du terminal mobile MS qu'à la zone de localisation près (en l'occurrence la zone de localisation courante ZA1) étant donné que l'identité de la cellule de service du terminal mobile MS n'est pas communiquée à l'équipement de détermination de localisation EL lorsque le terminal mobile MS est dans cet état. De ce fait, lorsque l'équipement de détermination de localisation EL doit établir une communication avec le terminal mobile MS, les messages de recherche doivent être diffusés sur toutes les stations de base BS1, BS2 et BS3 de la zone de localisation ZA1 de manière à s'assurer que le terminal mobile MS reçoit bien au moins l'un de ces messages. Une telle diffusion demande des ressources réseau importantes, notamment lorsque les cellules constituant la zone de localisation courante sont nombreuses. Ces ressources réseau pourraient être diminuées si l'équipement de détermination de localisation EL connaissait plus précisément la position géographique du terminal mobile MS dans le réseau de communication cellulaire. De plus, il serait intéressant pour un opérateur de pouvoir localiser un terminal mobile avec une précision accrue afin de pouvoir définir des zones géographiques particulières de dimensions plus restreintes que celles actuellement définies par les zones de localisation et afin que cet opérateur puisse, par exemple, appliquer une tarification particulière pour certaines de ces zones géographiques particulières ou déployer un service uniquement sur une de ces zones.

On connaît également le document US-A-6 363 255 qui décrit un système de communication par terminal mobile qui comprend un mécanisme pour réduire le trafic de messages transmis lors d'opérations de "paging" et de mise à jour de la localisation. Ce mécanisme ne pourrait donner satisfaction dans le cas où le terminal mobile est dans un état de veille, ce qui est le but de la présente invention.

Le but de la présente invention est de résoudre le problème décrit ci-dessus, à savoir la détermination précise de la position géographique d'un terminal mobile en état de veille dans un réseau de communication cellulaire.

L'invention concerne un procédé, un équipement et un système selon les revendications 1, 8 et 9.

Les caractéristiques de l'invention mentionnées ci-dessus, ainsi que d'autres, apparaîtront plus clairement à la lecture de la description suivante d'un exemple de réalisation, ladite description étant faite en relation avec le dessin joint dans lequel :
La Fig. 1 est une vue schématique d'un système de communication cellulaire pour terminaux mobiles selon l'état de la technique,
La Fig. 2 est une vue schématique d'un système de communication cellulaire pour terminaux mobiles selon la présente invention, et
La Fig. 3 représente un diagramme des étapes du procédé de détermination de localisation d'un terminal mobile dans un réseau de communication cellulaire selon la présente invention.

La Fig. 4 illustre un procédé de détermination de localisation d'un terminal mobile dans un réseau de communication cellulaire selon un mode de réalisation de la présente invention.

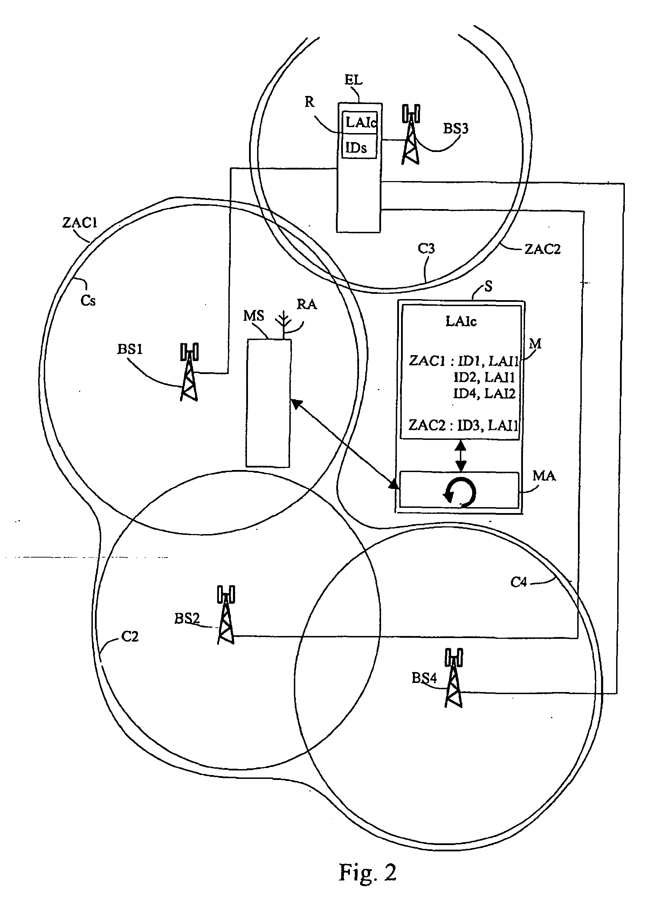

On a représenté, en regard avec la Fig. 2, une vue schématique d'un système de communication cellulaire pour terminaux mobiles selon la présente invention. Les éléments de la Fig. 2 identiques à ceux décrits à la Fig. 1 portent les mêmes références.

Le support de mémorisation S comporte des moyens MA d'initier des actions qui sont exécutées par le terminal mobile MS. Le support mémoire S est par exemple une carte SIM (Subscriber Identity Module) pro-active dans le cas où le terminal mobile MS est un téléphone mobile équipé de moyens de communication RA de type GSM. Une carte SIM est dite pro-active lorsqu'elle peut initier des actions sur un terminal mobile par l'envoi de commandes à ce terminal. Les moyens MA regroupent donc des commandes (appelées SIM Application Toolkit en anglais) définies par la recommandation GSM 11.14, ainsi que des moyens pour envoyer ces commandes au terminal mobile et recevoir des données cn réponse à ces commandes. Les moyens MA permettent également d'effectuer des opérations simples de calcul telles que des comparaisons entre données numériques. Le support de mémorisation S peut également être un élément d'un équipement réseau relié au terminal mobile MS par un réseau de communication filaire ou pas.

Les moyens de communication radio RA sont destinés à obtenir l'identité IDₛ de la cellule de service Cₛ du terminal mobile MS. L'identité d'une cellule est définie par sa puissance d'émission nominale (ce qui se traduit par une zone de couverture à l'intérieur de laquelle le niveau du champ électrique est supérieur à un seuil déterminé), et par une fréquence de porteuse.

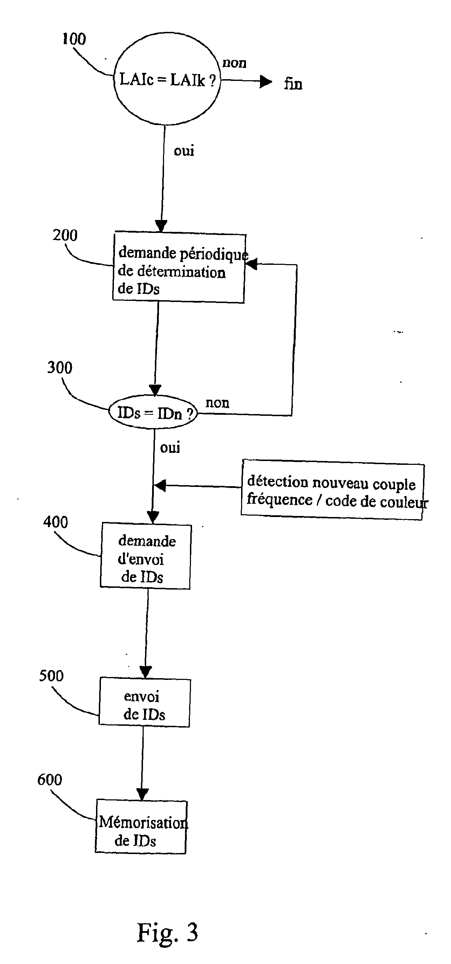

La Fig. 3 représente un diagramme des étapes du procédé de détermination de localisation d'un terminal mobile dans un réseau de communication cellulaire selon la présente invention. La description de ce procédé de détermination de localisation est Faite également en regard avec la Fig. 2.

Le procédé débute dès lors que le terminal mobile MS passe en état de veille ou dans le cas où le terminal mobile est dans cet état dès lors qu'il change de zone géographique, par exemple de zone de localisation, par une étape 400 au cours de laquelle les moyens MA demandent au terminal mobile MS d'envoyer à l'équipement de détermination de localisation EL l'identité IDₛ de la cellule de service. L'étape 400 est alors suivie d'une étape 500 d'envoi à l'équipement de détermination de localisation EL d'un message comportant l'identité IDₛ de la cellule de service une fois déterminée par le terminal mobile MS. Selon un mode de réalisation de la présente invention, un message court de type SMS est envoyé à l'équipement de détermination de localisation EL.

L'étape 500 est suivie d'une étape 600 au cours de laquelle l'identité de la cellule de service ainsi reçue est mémorisée par l'équipement de détermination de localisation EL. Par exemple, cette identité est mémorisée sur le registre de localisation R.

Selon un mode de réalisation de la présente invention, la mémoire M mémorise P couples, chacun de ces couples étant formé de l'identité d'une cellule du réseau de communication cellulaire et de l'identifiant de la zone de localisation à laquelle la cellule appartient. Les P groupes sont regroupés afin de déterminer au moins une zone géographique particulière. Selon l'exemple représenté à la Fig. 2, deux zones géographiques particulières ZAC₁ et ZAC₂ ont été ainsi définies. La zone géographique particulière ZAC₁ a été définie à partir des cellules C₁, C₂ et C₄. Les cellules C₁ et C₂ appartiennent à la zone de localisation ZA₁ et la cellule C₄ appartient à la zone de localisation ZA₂. On peut noter que la zone géographique particulière ZAC₁ est donc définie par des cellules appartenant à des zones de localisation différentes. La zone géographique particulière ZAC₂ a été définie à partir de la cellule C₃ appartenant à la zone de localisation ZA₁. Ainsi, la mémoire M est initialisée par exemple par un opérateur par les trois couples (ID₁, LAI₁), (ID₂,LAI₁) et (ID₄, LAI₂) décrivant la zone géographique particulière ZAC₁, et par le couple (ID₃,LAI₁) décrivant la zone géographique particulière ZAC₂.

Selon ce mode de réalisation, l'étape 400 est précédée d'une étape 100 de comparaison au cours de laquelle l'identifiant LAI_{c} de la zone de localisation courante est comparé à l'identifiant LAIₖ de la zone de localisation de chaque couple mémorisé par la mémoire M. Dans le cas où l'identifiant LAI_{c} est différent de chaque identifiant LAIₖ, le procédé de détermination de localisation s'arrête. Dans le cas où l'identifiant LAI_{c} est identique à l'un des identifiants LAIₖ, l'étape 100 est suivie d'une étape 200 au cours de laquelle le support mémoire S, au travers des moyens MA, demande périodiquement au terminal mobile MS de déterminer et de lui faire parvenir l'identité IDₛ de la cellule de service du terminal mobile MS. Une fois l'identité IDₛ obtenue, l'étape 200 est suivie d'une étape 300 au cours de laquelle le support mémoire S, au travers des moyens MA, compare l'identité IDₛ avec l'identité IDₙ de chaque couple mémorisé par la mémoire M dont l'identifiant de zone de localisation est identique à l'identifiant LAI_{c}. Selon l'exemple de la Fig. 2, les identités ID₁, ID₂ et ID₃ sont considérées lors de cette étape car la zone de localisation courante est la zone de localisation ZA₁. Deux identités de cellules sont considérées identiques dès lors que leurs puissances d'émission nominale et leurs fréquences de porteuse sont identiques. Dans le cas où l'identité IDₛ est différente de l'identité IDₙ de chacun desdits couples, l'étape 300 est suivie de l'étape 200 précédemment décrite. Dans le cas où l'identité IDₛ est identique à l'une des identités IDₙ, le support mémoire S, au travers des moyens MA, informe le terminal mobile MS qu'il vient d'entrer dans une zone géographique particulière, en l'occurrence dans la zone géographique ZAC₁ selon la Fig. 2. Le terminal mobile MS envoie alors un message comportant l'identité de la cellule de service à l'équipement de détermination de localisation EL (étape 400).

Le procédé de détermination de localisation s'arrête dès lors que le terminal mobile n'est plus en état de veille.

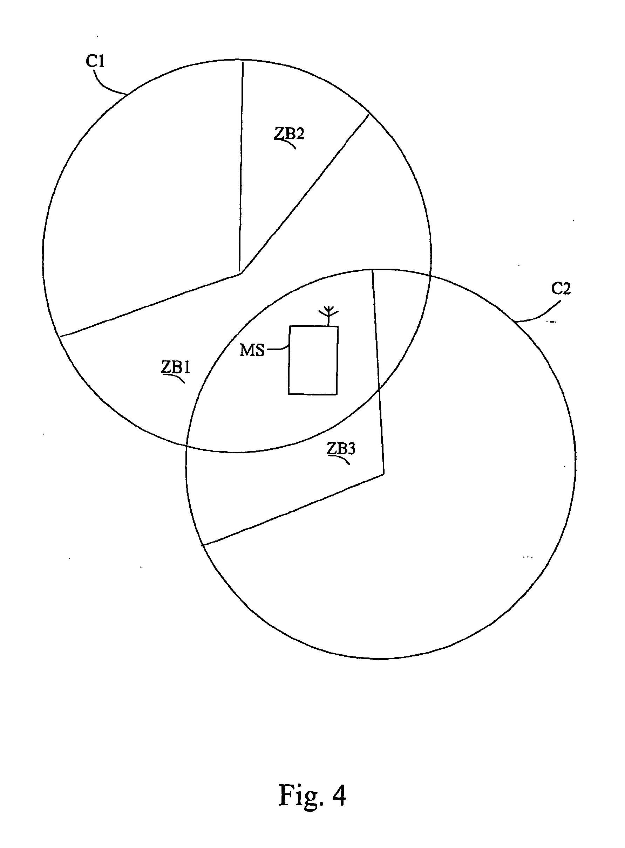

La Fig. 4 représente une illustration d'un mode de réalisation de la présente invention. Selon ce mode de réalisation, l'identité IDᵢ de chaque cellule Cᵢ (i-1,...,4 selon l'exemple de la Fig. 2) mémorisée par la mémoire M comporte au moins un couple fréquence de porteuse/code de couleur qui détermine au moins une sous-zone géographique particulière ZBj à l'intérieur de la cellule Cᵢ. Selon la Fig. 4, seules les cellules C₁ et C₂ sont représentées. La cellule C₁ est découpée en deux sous-zones géographiques particulières ZB₁ et ZB₂ auxquelles sont respectivement associées les couples f1/code a et f2/code b, et la cellule C₂ comporte une seule sous-zone géographique particulière ZB₃ associée au couple f3/code c. On a également représenté à la Fig. 4 le terminal mobile MS se trouvant à la fois dans la sous-zone ZB₁ de la cellule C₁ et dans la sous-zone ZB₃ de la cellule C₂.

Dans le cas où au cours de l'étape 300 l'identité de la cellule de service Cₛ, en l'occurrence la cellule C₁ de la Fig. 4, a été considérée comme étant identique à l'identité IDₙ de l'une des cellules mémorisées par la mémoire M, le support mémoire S demande, au cours de l'étape de demande d'envoi 400, au terminal mobile MS d'obtenir les couples fréquences/code de couleurs au voisinage du terminal mobile MS, en l'occurrence les couples correspondant aux sous-zones ZB₁ et ZB₃, et de les envoyer à l'équipement de détermination de localisation EL en plus de l'identité IDₛ de la cellule de service. L'équipement de détermination de localisation EL détermine alors que le terminal mobile MS se trouve dans une zone géographique délimitée, selon l'exemple de la Fig. 4, par l'intersection des sous-zones ZB₁ et ZB₃. La position géographique du terminal mobile MS est ainsi déterminée de façon plus précise que si seule l'identité de la cellule de service était envoyée, car la surface délimitée par l'intersection de ces sous-zones est inférieure à la surface d'une cellule du réseau de communication cellulaire. La précision de la position géographique du terminal mobile dépend alors de l'étendue de la cellule et du nombre de sous-zones de cette cellule.

Selon une variante de ce mode de réalisation, l'étape 400 de demande d'envoi est répétée dès que le terminal mobile détecte un nouveau couple fréquence/ code de couleur dans son voisinage.

## Revendications

1. Procédé de détermination de la localisation d'un terminal mobile dans un réseau de communication cellulaire lorsque ledit terminal est en état de veille,
chaque cellule dudit réseau de communication cellulaire étant désignée de manière unique par une identité, lesdites cellules étant regroupées en au moins une zone de localisation à laquelle est associé un identifiant unique,
ledit réseau de communication comportant un équipement de détermination de la localisation d'un terminal mobile ainsi qu'un équipement comportant des moyens pour demander audit terminal mobile d'exécuter des actions,
ledit terminal mobile étant équipé de moyens de détermination de la cellule, dite cellule de service, sous la couverture de laquelle il se trouve ainsi que de son identité, et des moyens pour envoyer l'identité de ladite cellule de service audit équipement de détermination de localisation,
**caractérisé en ce qu'**il comporte une étape de mémorisation de l'identifiant (LAIc) de la zone de localisation à laquelle appartient de manière courante ledit terminal mobile, au moins un couple, formé, pour chaque cellule dudit réseau de communication cellulaire, de l'identité (IDn) de ladite cellule et de l'identifiant (LAIk) de la zone de localisation à laquelle ladite cellule appartient, étant également mémorisé,
le procédé comportant de plus :
- une étape (100) de comparaison de l'identifiant (LAIc) de ladite zone de localisation avec l'identifiant (LAIK) de zone de localisation du ou de chacun desdits couples ainsi mémorisés, l'étape de comparaison (100), qui est destinée à être exécutée par l'équipement qui comporte des moyens pour demander audit terminal mobile d'exécuter des actions, étant suivie,
- dans le cas où l'identifiant (LAIc) de ladite zone de localisation courante est identique à l'identifiant (LAIk) de la zone de localisation de l'un desdits couples, par une étape (200) de demande périodique de la part dudit équipement audit terminal mobile de détermination de l'identité (IDs) de ladite cellule de service,
- l'étape (200) de demande de détermination, qui est destinée à être exécutée par l'équipement qui comporte des moyens pour demander audit terminal mobile d'exécuter des actions, étant suivie par une étape (300) de comparaison de l'identité (IDs) de la cellule de service ainsi déterminée avec l'identité (IDn) de cellule de chacun desdits couples dont l'identifiant de zone de localisation est identique à l'identifiant (LAIC) de la zone de localisation courante, l'étape (300) de comparaison de l'identité de cellules, qui est destinée à être exécutée par l'équipement qui comporte des moyens pour demander audit terminal mobile d'exécuter des actions, étant suivie dans le cas où l'identité (IDs) de ladite cellule de service est identique à l'identité (IDn) de la cellule de l'un desdits couples, par une étape (400) de demande, de la part de l'équipement qui comporte les moyens pour demander audit terminal mobile d'exécuter des actions, audit terminal mobile, d'envoi de l'identité de ladite cellule de service ainsi déterminée, suivie
- d'une étape (500) d'envoi de l'identité de ladite cellule de service par ledit terminal mobile vers ledit équipement de détermination de localisation, et
- une étape (600) de mémorisation par ledit équipement de détermination de localisation de ladite identité ainsi reçue en tant que localisation dudit terminal mobile.

2. Procédé de détermination de la localisation d'un terminal mobile selon la revendication 1, **caractérisé en ce que** ladite étape de demande est conditionnée par un événement survenant sur ledit terminal mobile et connu dudit équipement.

3. Procédé de détermination de la localisation d'un terminal mobile selon la revendication 2, **caractérisé en ce que** ledit événement se produit dès lors que ledit terminal mobile change de zone géographique.

4. Procédé de détermination de localisation d'un terminal mobile selon l'une des revendications précédentes, **caractérisé en ce que** l'identité de ladite cellule de service envoyée audit équipement de détermination de localisation par ledit terminal mobile est encapsulée dans un message court du type SMS.

5. Procédé de détermination de localisation d'un terminal mobile selon l'une des revendications précédentes, l'identité de cellule d'au moins un desdits couples étant définie, entre autre, par au moins un couple de valeurs de fréquence/code de couleurs définissant chacun, de manière unique, une sous-zone géographique particulière de la cellule, **caractérisé en ce qu'**au cours de l'étape de demande d'envoi de l'identité de la cellule de service, ledit équipement demande audit terminal mobile d'obtenir les couples fréquence/code de couleurs de son voisinage et d'envoyer ces couples fréquence/code de couleur dans ledit message envoyé audit équipement de détermination de localisation au cours de l'étape d'envoi de l'identité de la cellule de service.

6. Procédé de détermination de localisation d'un terminal mobile selon la revendication 5, **caractérisé en ce que** l'étape de demande d'envoi de l'identité de la cellule de service est répétée dès que ledit terminal mobile détecte un nouveau couple fréquence/code de couleur dans son voisinage.

7. Procédé de détermination de localisation d'un terminal selon l'une des revendications précédentes, **caractérisé en ce que** ledit équipement est une carte SIM pro-active.

8. Equipement destiné à être associé à au moins un terminal pour la mise en oeuvre d'un procédé de détermination de la localisation d'un terminal mobile selon une des revendications 1 à 7, alors que ledit terminal mobile est en état de veille dans un réseau de communication cellulaire,
chaque cellule dudit réseau de communication cellulaire étant désignée de manière unique par une identité, lesdites cellules étant regroupées en au moins une zone de localisation à laquelle est associé un identifiant unique,
ledit réseau de communication comportant en outre un équipement de détermination de la localisation d'un terminal mobile,
ledit terminal mobile étant équipé de moyens de détermination de la cellule, dite cellule de service, sous la couverture de laquelle il se trouve ainsi que de son identité, et des moyens pour envoyer l'identité de ladite cellule de service audit équipement de détermination de localisation, et
ledit équipement comportant des moyens pour demander audit terminal mobile d'exécuter des actions,
**caractérisé en ce qu'**il comporte en outre :
- une mémoire (M) destinée à mémoriser, d'une part l'identité de la zone de localisation à laquelle appartient ledit terminal mobile dite courante et, d'autre part, au moins un couple formé, pour chaque cellule dudit réseau de communication cellulaire, de l'identité (IDn) de ladite cellule et de l'identifiant (LAIk) de la zone de localisation à laquelle ladite cellule appartient,
- des moyens pour comparer l'identifiant (LAIC) de ladite zone de localisation avec l'identifiant (LAIk) de zone de localisation de chacun desdits couples ainsi mémorisés,
- des moyens pour demander périodiquement audit terminal mobile de déterminer l'identité (IDs) de ladite cellule de service dans le cas où l'identifiant (LAIc) de ladite zone de localisation courante est identique à l'identifiant (LAIk) de la zone de localisation de l'un desdits couples,
- des moyens pour comparer l'identité (IDs) de la cellule de service reçue dudit terminal mobile avec l'identité (IDn) de chaque cellule desdits couples dont l'identifiant (LAIC) correspond à la zone de localisation courante,
- des moyens pour demander audit terminal mobile, dans le cas ou l'identité (IDs) de ladite cellule de service est identique à l'identité (IDn) de la cellule de l'un desdits couples, d'envoyer l'identité (IDs) de ladite cellule de service ainsi déterminée à l'équipement de détermination de localisation.

9. Système de communication cellulaire comportant un équipement de détermination de localisation et impliquant un terminal mobile, ledit terminal mobile étant équipé de moyens de détermination d'une cellule de service et de son identité et étant relié audit équipement de détermination de localisation, les cellules dudit réseau de communication cellulaire étant regroupées pour former au moins une zone de localisation à laquelle est associé un identifiant unique, **caractérisé en ce que** lle système comporte également un équipement conforme à la revendication 8 qui est apte à mettre en oeuvre les étapes d'un procédé de détermination de localisation dudit terminal mobile selon l'une des revendications 1 à 7.

## Claims

1. A method for determining the location of a mobile terminal in a cellular communication network when said terminal is in standby mode, each cell of said cellular communication network being denoted in a unique manner by an identity, said cells being grouped in at least one location zone with which a unique identifier is associated, said communication network comprising equipment for determining the location of a mobile terminal and equipment comprising means for requesting said mobile terminal to perform actions, said mobile terminal being equipped with means for determining the cell, known as the service cell, under the coverage of which it is located, and its identity, and means for sending the identity of said service cell to the location determining equipment, **characterized in that** it comprises a stage of memory storage of the identifier (LAIc) of the location zone to which said mobile terminal currently belongs, at least one pair formed, for each cell of the cellular communication network, by the identity (IDn) of said cell and the identifier (LAIk) of the location zone to which the cell belongs also being stored, the method further comprising
- a stage (100) of comparison of the identifier (LAI_{C}) of said location zone with the location zone identifier (LAIk) of the pair or of each of the pairs thus stored, the stage of comparison (100), designed to be performed by the equipment comprising means for requesting the mobile terminal to perform actions, being followed,
- in the case in which the identifier (LAIc) of the current location zone is identical to the identifier (LAIk) of the location zone of one of said pairs, by a stage (200) in which the equipment periodically requests the mobile terminal to determine the identity (IDs) of said service cell,
- the determination request stage (200), designed to be performed by the equipment comprising means for requesting said mobile terminal to perform actions, being followed by a stage (300) of comparison of the identity (IDs) of the service cell thus determined with the cell identity (IDn) of each of said pairs whose location zone identifier is identical to the identifier (LAIc) of the current location zone, the stage (300) of comparison of the identity of cells, designed to be performed by the equipment comprising means for requesting said mobile terminal to perform actions, being followed, in the case in which the identity (IDs) of the service cell is identical to the identity (IDn) of the cell of one of said pairs, by a stage (400) in which the mobile terminal is requested, by the equipment comprising means for requesting said mobile terminal to perform actions, to send the identity of said service cell thus determined, followed by,
- a stage (500) in which the mobile terminal sends the identity of the service cell to the location determining equipment, and
- a stage (600) in which the location determining equipment stores said identity thus received as the location of said mobile terminal.

2. A method for determining the location of a mobile terminal according to claim 1, **characterized in that** said request stage is triggered by an event occurring in said mobile terminal known to the equipment.

3. A method for determining the location of a mobile terminal according to claim 2, **characterized in that** said event takes place once said mobile terminal changes geographical zone.

4. A method for determining the location of a mobile terminal according to one of the preceding claims, **characterized in that** the identity of said service cell sent to the location determining equipment by said mobile terminal is encapsulated in a short message of SMS type.

5. A method for determining the location of a mobile terminal according to one of the preceding claims, wherein the cell identity of at least one of said pairs is defined, inter alia, by at least one pair of frequency/colour code values each defining, in a unique manner, a specific geographical sub-zone of the cell, **characterized in that** during the stage in which sending of the identity of the service cell is requested, said equipment requests said mobile terminal to obtain the frequency/colour code pairs of its neighbourhood and to send said frequency/colour code pairs in the message sent to said location determining equipment during the stage of sending of the identity of the service cell.

6. A method for determining the location of a mobile terminal according to claim 5, **characterized in that** the stage in which sending of the identity of the service cell is requested is repeated once said mobile terminal detects a new frequency/colour code pair in its neighbourhood.

7. A method for determining the location of a terminal according to one of the preceding claims, **characterized in that** said equipment is a proactive SIM card.

8. Equipment designed to be associated with at least one terminal for the application of a method for determining the location of a mobile terminal according to one of claims 1 to 7, when said mobile terminal is in standby mode in a cellular communication network, each cell of said cellular communication network being denoted in a unique manner by an identity, said cells being grouped in at least one location zone with which a unique identifier is associated, said communication network further comprising equipment for determining the location of a mobile terminal, said mobile terminal being equipped with means for determining the cell, known as the service cell, under the coverage of which it is located, and its identity, and means for sending the identity of said service cell to the location determining equipment, said equipment comprising means comprising means for requesting said mobile terminal to perform actions, **characterized in that** it further comprises
- a memory (M) designed to store the identity of the current location zone to which said mobile terminal belongs and at least one pair formed, for each cell of said cellular communication network, by the identity (IDn) of said cell and the identifier (LAIk) of the location zone to which said cell belongs,
- means for comparing the identifier (LAIc) of said location zone with the identifier (LAIk) of the location zone of each of the pairs thus stored in the memory,
- means for periodically requesting said mobile terminal to determine the identity (IDs) of the service cell in the case in which the identifier (LAIc) of the current location zone is identical to the identifier (LAIk) of the location zone of one of said pairs,
- means for comparing the identity (IDs) of the service cell received from said mobile terminal with the identity (IDn) of each cell of said pairs whose identifier (LAIc) corresponds to the current location zone,
- means for requesting said mobile terminal, in the case in which the identity (IDs) of said service cell is identical to the identity (IDn) of the cell of one of the pairs, to send the identity (IDs) of said service cell thus determined to the location determining equipment.

9. A cellular communication system comprising location determining equipment and involving a mobile terminal, said mobile terminal being equipped with means for determining a service cell and its identity and being connected to the location determining equipment, the cells of said cellular communication network being grouped to form at least one location zone with which a unique identifier is associated, **characterized in that** the system also comprises equipment according to claim 8 which is designed to apply the stages of a method for determining the location of said mobile terminal according to one of claims 1 to 7.

## Patentansprüche

1. Verfahren zur Bestimmung der Lokalisierung eines mobilen Endgeräts in einem zellularen Kommunikationsnetz, wenn das Endgerät im Standby-Zustand ist,
wobei jede Zelle des zellularen Kommunikationsnetzes durch eine Identität eindeutig bezeichnet wird, wobei die Zellen in mindestens einer Lokalisierungszone zusammengefasst sind, der eine eindeutige Kennung zugeordnet ist;
wobei das Kommunikationsnetz eine Ausrüstung zur Bestimmung der Lokalisierung eines mobilen Endgeräts sowie eine Ausrüstung aufweist, die Einrichtungen aufweist, um das mobile Endgerät zur Ausführung von Aktionen aufzufordern,
wobei das mobile Endgerät mit Einrichtungen zur Bestimmung der als Dienstzelle bezeichneten Zelle, in deren Abdeckung es sich befindet, sowie ihrer Identität ausgerüstet ist und Einrichtungen aufweist, um die Identität der Dienstzelle an die Ausrüstung zur Lokalisierungsbestimmung zu senden,
**dadurch gekennzeichnet, dass** es einen Schritt der Speicherung der Kennung (LAIc) der Lokalisierungszone, zu der das mobile Endgerät aktuell gehört, aufweist, wobei mindestens ein Paar, das für jede Zelle des zellularen Kommunikationsnetzes aus der Identität (IDn) der Zelle und aus der Kennung (LAIk) der Lokalisierungszone, zu der die Zelle gehört, gebildet ist, ebenfalls gespeichert wird,
wobei das Verfahren außerdem aufweist:
- einen Schritt (100) des Vergleichens der Kennung (LAIc) der Lokalisierungszone mit der Kennung (LAIk) der Lokalisierungszone des oder jedes der so gespeicherten Paare, wobei der Vergleichsschritt (100), der dazu bestimmt ist, von der Ausrüstung ausgeführt zu werden, welche Einrichtungen aufweist, um das mobile Endgerät zur Ausführung von Aktionen aufzufordern,
- in dem Fall, in dem die Kennung (LAIc) der aktuellen Lokalisierungszone gleich der Kennung (LAIk) der Lokalisierungszone eines der Paare ist, gefolgt von einem Schritt (200) der periodischen Anforderung der Bestimmung der Identität (IDs) der Dienstzelle durch die Ausrüstung des mobilen Endgeräts,
- wobei auf den Schritt (200) der Bestimmungsanforderung, der dazu bestimmt ist, von der Ausrüstung ausgeführt zu werden, die Einrichtungen aufweist, um vom mobilen Endgerät die Ausführung von Aktionen zu fordern, ein Schritt (300) des Vergleichs der Identität (IDs) der so bestimmten Dienstzelle mit der Zellenidentität (IDn) jedes der Paare folgt, dessen Lokalisierungszonenkennung gleich der Kennung (LAIc) der aktuellen Lokalisierungszone ist, wobei auf den Schritt (300) des Vergleichs der Identität von Zellen, der dazu bestimmt ist, von der Ausrüstung ausgeführt zu werden, die Einrichtungen aufweist, um vom mobilen Endgerät die Ausführung von Aktionen zu fordern, in dem Fall, in dem die Identität (IDs) der Dienstzelle gleich der Identität (IDn) der Zelle eines der Paare ist, ein Schritt (400) der Anforderung an das mobile Endgerät, die Identität der so ermittelten Dienstzelle zu senden, seitens der Ausrüstung, die die Einrichtungen aufweist, um vom mobilen Endgerät die Ausführung von Aktionen zu fordern, folgt, gefolgt von
- einem Schritt (500) des Sendens der Identität der Dienstzelle durch das mobile Endgerät an die Ausrüstung zur Lokalisierungsbestimmung, und
- einem Schritt (600) der Speicherung der so empfangenen Identität als Lokalisierung des mobilen Endgeräts durch die Ausrüstung zur Lokalisierungsbestimmung.

2. Verfahren zur Bestimmung der Lokalisierung eines mobilen Endgeräts nach Anspruch 1, **dadurch gekennzeichnet, dass** der Anforderungsschritt durch ein Ereignis bedingt wird, das im mobilen Endgerät auftritt und der Ausrüstung bekannt ist.

3. Verfahren zur Bestimmung der Lokalisierung eines mobilen Endgeräts nach Anspruch 2, **dadurch gekennzeichnet, dass** das Ereignis auftritt, sobald das mobile Endgerät die geographische Zone wechselt.

4. Verfahren zur Lokalisierungsbestimmung eines mobilen Endgeräts nach einem der vorhergehenden Ansprüche, **dadurch gekennzeichnet, dass** die vom mobilen Endgerät an die Ausrüstung zur Lokalisierungsbestimmung gesendete Identität der Dienstzelle in eine Kurzmitteilung von der Art SMS eingebettet ist.

5. Verfahren zur Lokalisierungsbestimmung eines mobilen Endgeräts nach einem der vorhergehenden Ansprüche, wobei die Zellenidentität mindestens eines der Paare unter anderem durch mindestens ein Paar von Frequenz-/Farbcode-Werten definiert wird, die je eine besondere geographische Unterzone der Zelle eindeutig definieren, **dadurch gekennzeichnet, dass** während des Schritts der Anforderung des Sendens der Identität der Dienstzelle die Ausrüstung vom mobilen Endgerät fordert, die Frequenz-/Farbcode-Paare seiner Umgebung zu erlangen und diese Frequenz-/Farbcode-Paare in der Mitteilung zu senden, die während des Schritts des Sendens der Identität der Dienstzelle an die Ausrüstung zur Lokalisierungsbestimmung gesendet wird.

6. Verfahren zur Lokalisierungsbestimmung eines mobilen Endgeräts nach Anspruch 5, **dadurch gekennzeichnet, dass** der Schritt der Forderung des Sendens der Identität der Dienstzelle wiederholt wird, sobald das mobile Endgerät ein neues Frequenz-/Farbcode-Paar in seiner Umgebung erfasst.

7. Verfahren zur Lokalisierungsbestimmung eines Endgeräts nach einem der vorhergehenden Ansprüche, **dadurch gekennzeichnet, dass** die Ausrüstung eine proaktive SIM-Karte ist.

8. Ausrüstung, die dazu bestimmt ist, mindestens einem Endgerät zur Durchführung eines Verfahrens zur Bestimmung der Lokalisierung eines mobilen Endgeräts nach einem der Ansprüche 1 bis 7 zugeordnet zu werden, während das mobile Endgerät in einem zellularen Kommunikationsnetz im Standby-Zustand ist,
wobei jede Zelle des zellularen Kommunikationsnetzes eindeutig durch eine Identität bezeichnet wird, wobei die Zellen in mindestens einer Lokalisierungszone zusammengefasst sind, der eine eindeutige Kennung zugeordnet ist,
wobei das Kommunikationsnetz außerdem eine Ausrüstung zur Bestimmung der Lokalisierung eines mobilen Endgeräts aufweist,
wobei das mobile Endgerät mit Einrichtungen zur Bestimmung der als Dienstzelle bezeichneten Zelle, in deren Abdeckung es sich befindet, sowie deren Identität und mit den Einrichtungen ausgerüstet ist, um die Identität der Dienstzelle an die Ausrüstung zur Lokalisierungsbestimmung zu senden, und die Ausrüstung Einrichtungen aufweist, um vom mobilen Endgerät die Ausführung von Aktionen zu fordern,
**dadurch gekennzeichnet, dass** sie außerdem aufweist:
- einen Speicher (M), der dazu bestimmt ist, einerseits die Identität der so genannten aktuellen Lokalisierungszone, zu der das mobile Endgerät gehört, und andererseits mindestens ein Paar zu speichern, das für jede Zelle des zellularen Kommunikationsnetzes von der Identität (IDn) der Zelle und von der Kennung (LAIk) der Lokalisierungszone, zu der die Zelle gehört, gebildet wird
- Einrichtungen, um die Kennung (LAIc) der Lokalisierungszone mit der Lokalisierungszonenkennung (LAIk) jedes der so gespeicherten Paare zu vergleichen,
- Einrichtungen, um periodisch vom mobilen Endgerät zu fordern, die Identität (IDs) der Dienstzelle in dem Fall zu bestimmen, in dem die Kennung (LAIc) der aktuellen Lokalisierungszone gleich der Kennung (LAIk) der Lokalisierungszone eines der Paare ist,
- Einrichtungen, um die vom mobilen Endgerät empfangene Identität (IDs) der Dienstzelle mit der Identität (IDn) jeder Zelle der Paare zu vergleichen, deren Kennung (LAIc) der aktuellen Lokalisierungszone entspricht,
- Einrichtungen, um in dem Fall, in dem die Identität (IDs) der Dienstzelle gleich der Identität (IDn) der Zelle eines der Paare ist, vom mobilen Endgerät zu fordern, die Identität (IDs) der so bestimmten Dienstzelle an die Ausrüstung zur Lokalisierungsbestimmung zu senden.

9. Zellulares Kommunikationssystem, das eine Ausrüstung zur Lokalisierungsbestimmung aufweist und ein mobiles Endgerät einbezieht, wobei das mobile Endgerät mit Einrichtungen zur Bestimmung einer Dienstzelle und ihrer Identität ausgerüstet und mit der Ausrüstung zur Lokalisierungsbestimmung verbunden ist, wobei die Zellen des zellularen Kommunikationsnetzes zusammengefasst sind, um mindestens eine Lokalisierungszone zu formen, der eine eindeutige Kennung zugeordnet ist, **dadurch gekennzeichnet, dass** das System ebenfalls eine Ausrüstung nach Anspruch 8 aufweist, die die Schritte eines Verfahrens zur Lokalisierungsbestimmung des mobilen Endgeräts nach einem der Ansprüche 1 bis 7 durchführen kann.
